# EUROPEAN PATENT APPLICATION

(11) **EP 2 862 432 A1**
(43) Date of publication of application: **22.04.2015**
(21) Application number: 14184718.6
(22) Date of filing: 15.09.2014
(51) Int. Cl.: A01D 41/14

(54) **Header height sensor**

(30) Priority: 15.10.2013 US 201314054709
(71) Applicant: Deere & Company, Moline, IL 61265 (US)
(72) Inventor: Pierson, Joshua, Davenport, IA Iowa 52807 (US)
(74) Representative: Holst, Sönke

(57) **Abstract**

A header height sensor arrangement (100) configured to be fixed to an agricultural harvesting head (108) comprises a four bar linkage comprising four bars (110, 112, 118, 124) and a sensing element (106), wherein the sensing element (106) is disposed to sense relative movement of at least one bar of the four bar linkage with respect to another bar of the four bar linkage.

## Description

This invention relates to agricultural harvesting equipment. More particularly, it relates to sensors for detecting the height of agricultural harvesting heads.

Agricultural harvesting machines, such as windrowers or combine harvesters typically have agricultural harvesting heads that are supported on the front of the agricultural harvesting machine to carry the agricultural harvesting head to the field harvesting crops.

These agricultural harvesting heads are typically dynamically adjustable in height with respect to the self-propelled vehicle. This adjustment is typically made by an electronic control unit (ECU) that monitors a height sensor that indicates the height of the agricultural harvesting head over the field.

The ECU reads the height sensor, determines whether the agricultural harvesting head is too low or too high, and controls an actuator (e.g. one or more hydraulic cylinders) then raises and lowers the agricultural harvesting head if the agricultural harvesting head is too high or too low with respect to the agricultural harvesting machine, and hence too high or too low with respect to the ground over which the agricultural harvesting machine travels.

In recent years, agricultural harvesting heads have been developed that are longer, are lighter, and that travel faster and closer to the ground.

One problem that has appeared is the increased risk of damage to the agricultural harvesting head due to collisions with the ground.

Part of the problem is due to the inherent delay time between sensing the agricultural harvesting head is too low and taking corrective action such as raising the agricultural harvesting head with respect to the agricultural harvesting machine (and therefore with respect to the ground).

This is becoming a problem due to the traditional placement of the header height sensor relatively far back, either where it is attached to the agricultural harvesting machine, or where it is attached to a rear portion of the agricultural harvesting head.

In one arrangement, shown in US 2013104508 A1, the height sensor is attached immediately behind a reciprocating knife of a mowing platform (also called a "draper head" or "draper platform"). The point of contact of the sensor arm on the ground is behind the sensing element, which in turn is behind the reciprocating knife. This arrangement is advantageous in that it permits multiple height sensors to be placed along the length of the reciprocating knife, however, it also means that the height is not sensed until leading portions of the agricultural harvesting head (such as crop dividers) have already passed over (and potentially collided with) protrusions from the ground.

In another arrangement, shown in US 2011271653 A1 the height sensor is attached forward of a reciprocating knife for row unit on a crop divider. Crop dividers are extend substantially forward of the reciprocating knife to divide the crop before it reaches the reciprocating knife. Yet even in this arrangement, the sensor arm is an elongate member that trails behind the sensing element, and thus substantially behind the forward tip of the crop divider. While this arrangement may substantially reduce the risk of collisions of the reciprocating knife with the ground, the location of the point of contact with the ground behind the sensor will still permit some collisions to occur.

What is needed, therefore, is a new height sensor arrangement that senses the height above the ground at a location farther forward than the prior art height sensors.

It is an object of this invention to provide such a new height sensor arrangement.

This object is achieved with the subject matter of claim 1. The dependent claims recite features of advantageous embodiments of the invention.

A header height sensor arrangement is configured to be fixed to an agricultural harvesting head is provided, the header height sensor arrangement comprising: a mounting bracket configured to be fixed to the agricultural harvesting head, wherein the mounting bracket defines a first bar of a four bar linkage; a second bar pivotally coupled to the mounting bracket to pivot with respect to the first bar about a first pivot axis; a third bar pivotally coupled to the mounting bracket to pivot with respect to the first bar about a second pivot axis; a fourth bar pivotally coupled to the second bar to pivot with respect to the second bar about a third pivot axis, and further pivotally coupled to the third bar to pivot with respect to the third bar about a fourth pivot axis; and a sensing element disposed to text relative movement of at least one of the first bar, the second bar, the third bar and the fourth bar with respect to another of the first bar, the second bar, the third bar, and the fourth bar.

The fourth bar may comprise a ground engaging tip.

The ground engaging tip may be disposed forward of the first pivot axis and the third pivot axis over substantially an entire range of operating movement of the ground engaging tip. The ground engaging tip may be disposed forward of the second pivot axis and the fourth pivot axis.

The fourth bar may comprise a breakaway joint.

The breakaway joint may be disposed forward of the third pivot axis and the fourth pivot axis over the entire range of operating movement of the fourth bar.

One of the first bar, the second bar, the third bar and the fourth bar may comprise a ground engaging tip and the ground engaging tip may be disposed forward of the sensing element over substantially the entire range of operating movement of the sensing element.

The agricultural harvesting head may comprise an arm, and the arm may be configured to support an endless belt conveyor, and the header height sensor arrangement when in an upper operating position may be configured to be received substantially entirely inside the arm.

The breakaway joint may be biased by at least one spring of a first spring and a second spring.

The breakaway joint may be biased to flex when the agricultural harvesting head is driven in a direction opposite its direction of travel when harvesting.

The agricultural harvesting head may comprise an arm and the arm may be a crop divider.

An embodiment of the invention is shown in the drawings, in which:
Figure 1 is a perspective view of a header height sensor arrangement in accordance with the present invention.
Figure 2 is a side view of an arm of a draper platform coupled to the header height sensor arrangement of Figure 1.
Figure 3 is a fragmentary perspective view of a breakaway joint of the header height sensor arrangement of Figures 1 and 2.

The term "side-to-side", "sideways", "laterally" or "lateral" refer to a direction that is horizontal and generally parallel to the longitudinal extent of the reciprocating knife and to the longitudinal extent of the agricultural harvesting head itself. This direction is perpendicular to a direction of travel "V" of the agricultural harvesting machine and the agricultural harvesting head as they travel through the field harvesting crops. The terms "in front of", "front", "forward", "fore" and the like refer to the direction of travel "V". The terms "back", "rear", "behind", "to the rear of" and the like refer to a direction opposite to the direction of travel "V".

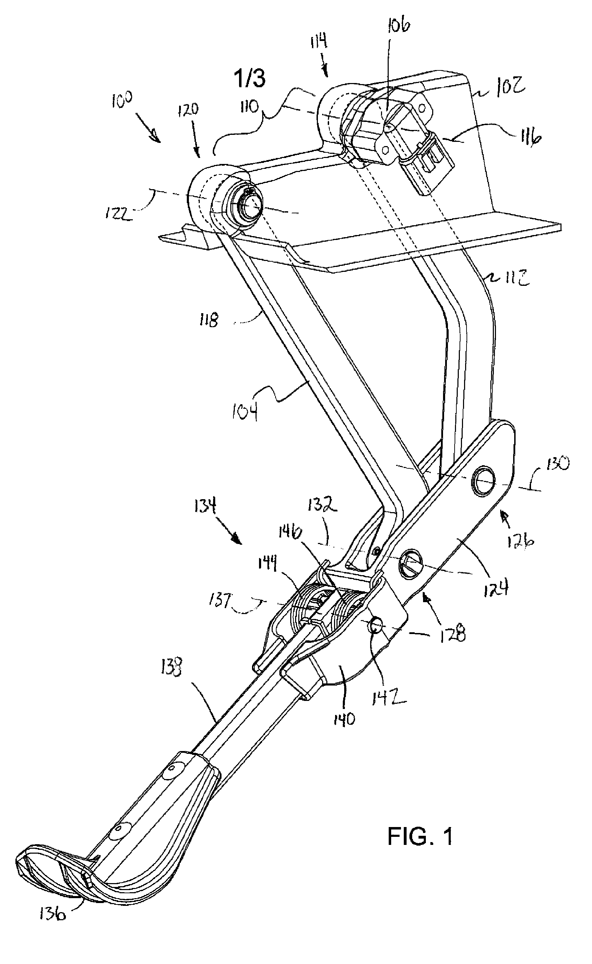

In Figure 1, a header height sensor arrangement 100 comprises a mounting bracket 102, a sensor arm 104 and the sensing element 106.

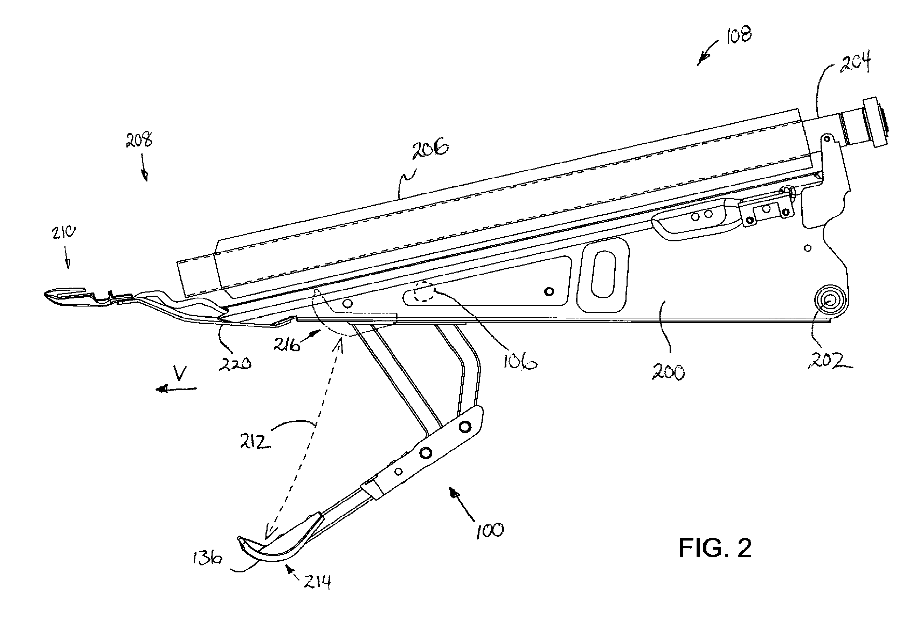

The mounting bracket 102 is configured to be fixed to the agricultural harvesting head 108 (Figure 2). The mounting bracket 102 is pivotally coupled to the sensor arm 104 to permit the sensor arm 104 to move up and down with respect to the mounting bracket 102, and hence with respect to the agricultural harvesting head 108. The mounting bracket 102 also supports the sensing element 106.

The sensing element 106 is coupled to the sensor arm 104 to sense changes in position of the sensor arm 104 with respect to the mounting bracket 102, and thus with respect to the agricultural harvesting head 108. The sensing element 106 shown here, is a simple rotary sensor, such as a resistor, potentiometer, shaft encoder, or other device configured to generate a signal indicative of a relative rotation of a sensor shaft with respect to the sensor body. In another arrangement, a linear sensor or proximity sensor is used. An advantage of a rotary sensor is that the sensor package can be made very compact. Further a rotary sensor is easily connected to sensor arms that typically are supported at a pivot point that defines a pivot axis and rotate about the pivot axis to indicate a change in the height of an agricultural harvesting head.

The sensor arm 104 is in the form of a four bar linkage that includes four bars connected at four pivot joints. The bars are coupled to each other at the four pivot joints and are constrained to pivot with respect to each other about those joints.

The mounting bracket 102 defines a first bar 110 of the four bar linkage.

The mounting bracket 102 is connected to a second bar 112 of the four bar linkage at a pivot joint 114. Pivot joint 114 constrains the second bar 112 to pivot with respect to the mounting bracket 102 about a pivot axis 116.

The mounting bracket 102 is connected to a third bar 118 of the four bar linkage at a pivot joint 120. Pivot joint 120 constrains the third bar 118 to pivot with respect to the mounting bracket 102 about a pivot axis 122.

A fourth bar 124 of the four bar linkage is pivotally connected to the lower end of the second bar 112 and the lower end of the third bar 118 at pivot joint 126 and pivot joint 128, respectively.

Pivot joint 126 constrains the fourth bar 124 to pivot with respect to the second bar 112 about a pivot axis 130.

Pivot joint 128 constrains the fourth bar to pivot with respect to the third bar 118 about a pivot axis 132.

Pivot axis 116, pivot axis 122, pivot axis 130, and pivot axis 132 extend generally horizontally and laterally. Further, pivot axis 116, pivot axis 122, pivot axis 130, and pivot axis 132 extend parallel to each other.

The fourth bar 124 comprises a breakaway joint 134 and a ground engaging tip 136. The breakaway joint 134 is disposed along the fourth bar 124 between the ground engaging tip 136 and the pivot joint 128. The breakaway joint 134 permits the ground engaging tip 136 (and the shank 138 from which the ground engaging tip 136 extends) to pivot upward when the agricultural harvesting head is driven in a direction opposite to the direction of travel "V". This reduces the risk of damage to the sensor arm 104 when the agricultural harvesting machine supporting the agricultural harvesting head 108 is driven in reverse.

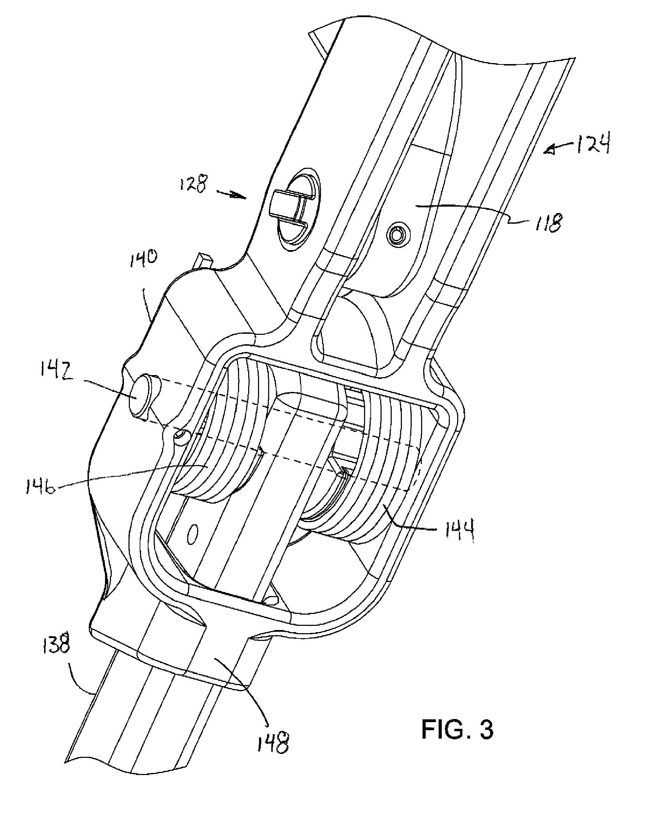

Referring to Figures 1 and 3, the breakaway joint 134 is defined by and upper end of the shank 138, which is pinned to a housing 140 with a pivot pin 142. The pivot pin 142 is supported at one end on one side of the housing 140 and at the other end on the other side of the housing 140. The pivot pin 142 extends a corresponding aperture in the shank 138.

By this arrangement, the lower portion of the fourth bar 124, including the ground engaging tip 136 and the shank 138 to which it is fixed are permitted to pivot upward with respect to the upper portion of the fourth bar 124 (i.e. the portion of the fourth bar 124 in which the pivot joint 126 and the pivot joint 128 are disposed). The pivot pin constrains the lower portion of the fourth bar 124 to pivot with respect to the upper portion of the fourth bar 124 to pivot with respect to each other about pivot axis 137.

To maintain the fourth bar 124 in the orientation shown in the figures herein, a first spring 144 and a second spring 146 (both configured as coil springs) are provided, one on each lateral side of the shank 138. The first spring 144 and the second spring 146 have two ends, one end engaging the housing 140, and the other end engaging the shank 138. The first spring 144 and the second spring 146 are coiled about the pivot pin 142 and the pivot axis 137. The pivot axis 137 is parallel to the pivot axis 116, the pivot axis 122, the pivot axis 130, and the pivot axis 132.

The first spring 144 and the second spring 146 are preloaded such that they hold the shank 138 firmly against an abutment 148 (see Figure 3) formed by the housing 140.

The preload for the first spring 144 and the second spring 146 is selected such that during normal harvesting operations (i.e. operations in the direction of movement "V") the shank 138 will be held in contact with the abutment 148 of the housing 140.

The preload for the first spring 144 and the second spring 146 is also selected such that during movement in a direction opposite to the direction "V", any ground forces acting upon the ground engaging tip 136 that would otherwise cause the ground engaging tip 136 to embed itself in the ground will instead permit the ground engaging tip 136 and the shank 138 upon which it is mounted to pivot upward away from the abutment 148, and thereby prevent (or reduce) any damage to the header height sensor arrangement 100. The preload for the first spring 144 and the second spring 146 therefore bias the shank 138 and the ground engaging tip 136 downward toward the ground. At the same time the preload for the first spring 144 and the second spring 146 can be overcome by ground forces acting on the tip that would otherwise cause damage.

Figure 2 illustrates the header height sensor arrangement 100 in its preferred operating position. The header height sensor arrangement 100 is fixed to a forward end of an arm 200 that is supported on a laterally extending frame (not shown) of the agricultural harvesting head 108. The arm 200 is supported on the frame at a pivot point 202 disposed at the rear of the arm. The arm 200 supports a roller 204 about which an endless belt conveyor 206 circulates. The arm 200 and the roller 204 extend generally fore and aft, parallel to the direction of travel "V". They are inclined slightly downward at their forward end 208. A knife guard 210 of a reciprocating knife is supported on the front of the arm 200. The knife guard 210 supports a reciprocating bar member (not shown) of conventional arrangement for reciprocating movement in a direction generally parallel to the ground and at a right angle to the direction of travel "V". The ground engaging tip 136 is constrained by the geometry of the four bar linkage to follow a path 212. The path 212 is generally vertical, and (in the illustrated embodiment) extends both upward and rearward. When the ground engaging tip 136 is in an extended (lower) position 214, the path 212 defines an angle of 25° to 45° rearward with respect to a vertical direction. When the ground engaging tip 136 is in a retracted (upper) position 216 the path 212 defines an angle of 5° to 35° rearward with respect to the vertical direction. At every position of the ground engaging tip 136 between these two positions, the path 212 follows a continuous arc, and thus the path 212 is angled rearward as it travels between its extended (lower) position and its retracted (upper) position.

The path 212 is defined by the relative lengths of each bar 110, 112, 118, 124 of the four bar linkage and of the location of the pivot joints 114, 120, 126, 128 that couple the four bars together.

Every ground engaging position of the ground engaging tip 136 over its normal range of travel (e.g. from lower (extended) position 214 to upper (retracted) position 216) is disposed forward of pivot joint 114, pivot joint 120, pivot joint 126, and pivot joint 128.

Further, every ground engaging position of the ground engaging tip 136 over its normal range of travel is disposed forward of pivot axis 116, pivot axis 122, pivot axis 130, and pivot axis 132.

Further, every ground engaging position of the ground engaging tip 136 over its normal range of travel is disposed forward of the sensing element 106.

This has the advantage of permitting the header height sensor arrangement 100 to sense the position of the ground at a location well forward of prior art sensor arrangements. Further, since the bulk of the header height sensor arrangement 100 is disposed behind the ground engaging position of the ground engaging tip 136, the components can be arranged such that they are retracted into and protected inside the structure on the agricultural harvesting head 108 to which they are fixed. In the embodiment shown in Figure 2, for example, the sensing element 106 is located in a hollow inside the arm 200. Further, when the ground engaging tip 136 is at its highest point, the other elements of the four bar linkage are also received inside this hollow. In its upper (retracted) position 216, the bottom of the ground engaging tip (the portion that touches the ground) is the lowermost portion of the header height sensor arrangement 100, and all the other elements are disposed above it and protected by the arm 200. The header height sensor arrangement 100 is therefore capable of being received substantially completely inside the arm 200. Furthermore, the header height sensor arrangement 100 in its upper (retracted) position 216 is disposed above the lower ground engaging surface of the skid shoe 220. In this manner, no matter how low the agricultural harvesting head 108 is lowered, even into contact with the ground, damage to the header height sensor arrangement 100 is eliminated (or minimized).

It should be understood that the particular embodiments shown and discussed herein are not the only ways in which the invention can be created. They are the currently preferred embodiments of the invention, but the invention is anything that the claims describe. One skilled in the art of agricultural harvester and agricultural harvesting head design and manufacture can readily see other variations of the invention that would also fall within the scope of the claims.

For example, the breakaway joint 134 can be disposed at a different location in the four bar linkage to ensure that the ground engaging tip 136 will flex upward rather than dig into the soil.

As another example, the breakaway joint 134 can be eliminated if the soil is firm, or the ground engaging tip 136 is sufficiently large to not to dig into the soil.

As another example, the ground engaging tip 136 can be moved rearward and the shank 138 eliminated if the point of contact with the ground need not be so far forward.

As another example, the sensing element 106 can be disposed at pivot joint 120 instead of pivot joint 114.

As another example, the arm 200 is a crop divider disposed at one end of the agricultural harvesting head 108.

As another example, the orientation of the breakaway joint 134 can be reversed such that lower portion of the fourth bar 124 defines the housing 140, and the upper portion of the fourth bar 124 defines the shank 138 is received in the housing 140.

## Claims

1. A header height sensor arrangement (100) configured to be fixed to an agricultural harvesting head (108), wherein the header height sensor arrangement (100) comprises:
a mounting bracket (102) configured to be fixed to the agricultural harvesting head (108), wherein the mounting bracket (102) defines a first bar (110) of a four bar linkage;
a second bar (112) pivotally coupled to the mounting bracket (102) to pivot with respect to the first bar (110) about a first pivot axis (116);
a third bar (118) pivotally coupled to the mounting bracket (102) to pivot with respect to the first bar (110) about a second pivot axis (122);
a fourth bar (124) pivotally coupled to the second bar (112) to pivot with respect to the second bar (112) about a third pivot axis (130), and further pivotally coupled to the third bar (118) to pivot with respect to the third bar (118) about a fourth pivot axis (132); and
a sensing element (106) disposed to text relative movement of at least one of the first bar (110), the second bar (112), the third bar (118) and the fourth bar (124) with respect to another of the first bar (110), the second bar (112), the third bar (118), and the fourth bar (124).

2. The header height sensor arrangement (100) of Claim 1, wherein the fourth bar (124) comprises a ground engaging tip (136).

3. The header height sensor arrangement (100) of Claim 2, wherein the ground engaging tip (136) is disposed forward of the first pivot axis (116) and the third pivot axis (130) over substantially an entire range of operating movement of the ground engaging tip (136).

4. The header height sensor arrangement (100) of Claim 3, wherein the ground engaging tip (136) is disposed forward of the second pivot axis (122) and the fourth pivot axis (132).

5. The header height sensor arrangement (100) of Claim 1, wherein the fourth bar (124) comprises a breakaway joint (134).

6. The header height sensor arrangement (100) of Claim 5, wherein the breakaway joint (134) is disposed forward of the third pivot axis (130) and the fourth pivot axis (132) over anentire range of operating movement of the fourth bar (124).

7. The header height sensor arrangement (100) of Claim 1, wherein one of the first bar (110), the second bar (112), the third bar (118) and the fourth bar (124) comprises a ground engaging tip (136) and further wherein the ground engaging tip (136) is disposed forward of the sensing element (106) over substantially an entire range of operating movement of the sensing element (106).

8. The header height sensor arrangement (100) of Claim 1, wherein the agricultural harvesting head (108) comprises an arm (200), and further wherein the arm (200) is configured to support an endless belt conveyor (206), and further wherein the header height sensor arrangement (100) when in an upper operating position (216) is configured to be received substantially entirely inside the arm (200).

9. The header height sensor arrangement (100) of Claim 5, wherein the breakaway joint (134) is biased by at least one spring of a first spring (144) and a second spring (146).

10. The header height sensor arrangement (100) of Claim 5, wherein the breakaway joint (134) is biased to flex when the agricultural harvesting head (108) is driven in a direction opposite a direction of travel when harvesting ("V").

11. The header height sensor arrangement (100) of Claim 1, wherein the agricultural harvesting head (108) comprises an arm (200) and further wherein the arm (200) is a crop divider.

12. A harvesting head (108) comprising a header height sensor arrangement (100) according to one of the preceding claims.
